# EUROPÄISCHE PATENTANMELDUNG

(11) **EP 0 591 674 A2**
(43) Veröffentlichungstag der Anmeldung: **13.04.1994**
(21) Anmeldenummer: 93113676.6
(22) Anmeldetag: 26.08.1993
(51) Int. Cl.: A01N 65/00

(54) **Verwendung von Meliaceen-Pflanzen bzw. -Pflanzenteilen als Pflanzenschutzmittel mit fungizider Wirkungsrichtung**

(30) Priorität: 07.09.1992 DE 4229815
(71) Anmelder: GEBRÜDER SCHAETTE KG, D-88331 Bad Waldsee (DE)
(72) Erfinder: Lehmann, Wolfgang, Dr., D-6140 Bensheim (DE)
(74) Vertreter: Haibach, Tino, Dr.

(57) **Zusammenfassung**

Beschrieben wird die Verwendung von Pflanzen oder Pflanzenteilen der Meliaceen Neem-Baum (Antelaea azadirachta, Synonym: Melia azadirachta L., Synonym: Azadirachta indica A.Juss.) oder Persischer Flieder (Melia azedarach L., Synonym: M. sempervirens Sw., Synonym: M. japonica Don.) als Wirkstoffkomponenten in Pflanzenschutzmitteln mit fungizider Wirkungsrichtung, zur Hemmung des Befalls von Kulturpflanzen mit pflanzenpathologischen Pilzen.

Vorzugsweise werden die Neem-Baum-Kerne oder die Früchte des Persischen Flieders verwendet, und zwar vorzugsweise wäßrige oder alkoholische Extrakte aus den Neem-Baum-Kernen bzw. aus den Früchten des Persischen Flieder-Baums. Jedoch können auch Pflanzenteile wie Blätter, Fruchtfleisch, Rinde, Holz unmittelbar in geeigneter Applikationsform, beispielsweise getrocknet und gemahlen als Pulver, verwendet werden. Besonders wirksame Zusammensetzungen lassen sich durch Aufbereitung der Neem-Baum-Kerne bzw. der Früchte des Persischen Fliederbaums mittels wiederholter Extraktion erzielen. Die erfindungsgemäßen Wirkstoffkonzentrate können entweder im Pillierungsverfahren in die Saatgutumhüllungssubstanzen der zu schützenden Pflanzen eingemengt werden, zum Schutz der Pflanzen gegen Befall durch samen- oder bodenbürtige pathogene Pilze. Alternativ können die erfindungsgemäßen Wirkstoffkonzentrate auch in wäßriger Form als Spritzbrühen direkt auf die zu schützenden Kultur-Pflanzen aufgebracht werden, zum Schutz vor Befall oder zur Reduzierung der Schäden durch Befall. Die erfindungsgemäßen Neem-Baum-Extrakte haben sich besonders wirkungsvoll zur Bekämpfung des Wurzelbrands von Rüben, des Schorfs und Mehltaus im Obstbau, des falschen und echten Mehltaus im Weinbau, der Fäule im Weinbau sowie bei Erdbeeren und Zierpflanzen erwiesen.

## Beschreibung

Die Erfindung betrifft allgemein das Gebiet des Pflanzenschutzes und näherhin Pflanzenschutzmittel mit fungizider Wirkung, d.h. zur Bekämpfung des Befalls von Kulturpflanzen mit pathogenen Pilzen bzw. der Schädigung durch pathogene Pilze.

Die Bekämpfung von Pilzinfektionen bereitet insbesondere in Spezialkulturen wie Kartoffeln oder Weinbau Schwierigkeiten. Durch äußere (insbesondere wirtschaftliche) Zwänge ist der Landwirt häufig genötigt, in kürzeren Abständen die gleiche Kultur anzubauen und infolgedessen auch Pflanzenschutzmittel (PSM) in zu kurzen Intervallen anzuwenden. Daraus folgt eine zunehmende Resistenzbildung der Pathogene gegenüber den PSM, insbesondere gegenüber solchen, die - als sogenannte 'one-site-inhibitors' den Schädling oder Pilz nur an einem Angriffsort attackieren.

So werden beispielsweise Keimlingserkrankungen von Rüben von samen- und bodenbürtigen Pilzen hervorgerufen. Insbesondere die bodenbürtigen Pilze reichern sich bei zu geringem Fruchtfolgeabstand an und werden, zunächst von Herden ausgehend, durch die maschinelle Bodenbearbeitung über den Rest des Ackers verbreitet. Bei der als 'Wurzelbrand' bekannten Pilzerkrankung äußert sich die Krankheit durch 'Umfallen' der Keimlinge (Umfallkrankheit der Rüben), ausgelöst durch Einschnürungen kurz unter der Bodenoberfläche. Frühe Infektionen können die Keimlinge schon vor dem Aufgang abtöten. Wachstumshemmungen können auch entstehen durch Verbräunungen der Wurzelspitzen und Schädigungen der Seitenwurzeln - daher auch die Bezeichnung der Krankheit als 'Wurzelbrand'.

Die herkömmliche Bekämpfung des Wurzelbrands erfolgt über die Zugabe von Fungiziden zu den Saatgutumhüllungssubstanzen. Toxikologische Bedenklichkeiten der herkömmlichen Zusätze lassen die Erforschung von Alternativen erwünscht erscheinen.

Allgemein gehören einige der zur Zeit üblichen Wirkstoffe zur Behandlung von landwirtschaftlichem und gärtnerischem Saatgut, wie Carbamate (Carbofuran-Insektizid) und Thiocarbamate (TMTD-Fungizid), die zur Sicherung der Anfangsentwicklung der Keimlinge gegenüber bodenbürtigen Schädlingen und boden- bzw. samenbürtigen Krankheitserregern eingesetzt werden, zu den Pflanzenschutzmitteln (PSM), die mit Anwendungsverboten belegt sind, wie zum Beispiel Carbofuran in Wasserschutzzonen. TMTD wie auch Carbofuran sind ferner als gesundheitsschädlich (Xn = mindergiftig, Gefahrstoffverordnung vom 2. April 1990) eingestuft worden und dürfen vor Beendigung des Bienenflugs nicht eingesetzt werden (B3 = bienengefährlich). Aus den vorstehend genannten Gründen wäre es dringend erwünscht, diese konventionellen Fungizid-Präparate durch Pflanzenschutzmittel gleicher Wirkungsrichtung ersetzen zu können, welche frei von den vorstehend geschilderten Nachteilen und Unzuträglichkeiten (Resistenzbildung, Umweltgefährdung, Gesundheitsschädlichkeit) sind, bei vergleichbarer fungizider Wirkung.

Der vorliegenden Erfindung liegt daher als Aufgabe die Schaffung eines Pflanzenschutzmittels zugrunde, das bei ausgeprägter, signifikanter Fungizidwirkung die genannten Nachteile und Beschränkungen der bekannten konventionellen Fungizide (Umweltunverträglichkeit, Gesundheitsschädlichkeit, Resistenzbildung der bekämpften pathogenen Pilze) nicht oder nur in verringertem Maß aufweist. Besonders erwünscht wäre die Schaffung derartiger fungizider Pflanzenschutzmittel auf der Basis von Naturstoffen; Naturstoffe haben den Vorteil, daß die Wirkung meistens von mehreren Komponenten ausgeht und synergistisch, additiv und auch an unterschiedlichen Wirkorten das Pathogen angreift oder auch die Resistenz der Kulturpflanze gegenüber dem Pathogen induzieren kann.

Die vorstehende Aufgabe wird erfindungsgemäß durch die Verwendung von Pflanzen oder Pflanzenteilen des Neem-Baumes (Antelaea azadirachta, Synonym: Melia azadirachta L., Synonym: Azadirachta indica A.Juss.) oder des Persischen Flieders (Melia azedarach L., Synonym: M. sempervirens Sw., Synonym: M. japonica Don.) als Wirkstoffkomponente in Pflanzenschutzmitteln mit fungizider Wirkungsrichtung, zur Hemmung des Befalls bzw. der Schädigung von Kulturpflanzen mit bzw. durch pflanzenpathogenen Pilzen, gelöst.

Von den Meliaceen ist bereits bekannt, daß diese Pflanzen bzw. Pflanzenteile Inhaltsstoffe mit interessanten Wirkungsrichtungen besitzen. So sind pharmakologische Anwendungen von Meliaceen ausgehend von der Humanmedizin und Kosmetik bis zur Veterinärmedizin bekannt. So ist beispielsweise aus der deutschen Patentschrift 3 132 655 die Verwendung eines Heißwasserextrakts der Borke des Neem-Baumes als hautkosmetisches Mittel mit antineoplastischer Aktivität bekannt. Aus der deutschen Patentschrift 3 631 858 ist die Verwendung von Samen des Neem-Baumes als Urtinktur zur Verflüssigung von zähem Schleim und dickflüssigen Sekreten, insbesondere bei Asthma bronchiale, bekannt. Aus der deutschen Patentschrift 3 809 427 schließlich ist die Verwendung von Samen des Neem-Baumes zur Prophylaxe und Therapie viraler Infektionen bekannt. Neben diesen Brauchbarkeiten auf pharmakologischem bzw. kosmetischem Gebiet sind im Hinblick auf Pflanzenschutz bisher nur insektizide Wirkungen von Meliaceen-Extrakten bekannt geworden, vgl. die 'Proceedings' der drei Neem-Konferenzen der Schriftenreihe der Deutschen Gesellschaft für Technische Zusammenarbeit (GTZ), SCHMUTTERER et al, 1981, SCHMUTTERER & ASCHER, 1984, 1987, sowie KETKAR (1976), WARTHEN (1979 und JACOBSON (1988) mit detaillierten Ausführungen über die Wirkungen von Meliaceen-Extrakten. Anwendungen finden Neem-Kern-Extrakte (NKE) vor allem als Insektizide in Ländern der Tropen und Subtropen.

Der vorliegenden Erfindung liegt die Erkenntnis zugrunde, daß Pflanzen bzw. Pflanzenteile der Meliaceen Neem-Baum und Persischer Flieder Inhaltsstoffe mit ausgeprägt fungizider Wirkung enthalten. Insbesondere haben sich die Neem-Kerne und die Früchte des Persischen Flieders wegen Ihres Wirkstoffgehalts mit fungizider Wirkungsrichtung als interessant erwiesen. Gemäß besonders bevorzugten Ausführungsformen ist die Verwendung in Form von aus den Neem-Baum-Teilen, insbesondere Neem-Baum-Kernen bzw. aus dem Persischen Flieder, insbesondere den Früchten des Persischen Flieders durch Aufbereitungs-Extraktion erhaltenen Wirkstoffkonzentraten fungizider Wirkungsrichtung vorgesehen.

Bei den erfindungsgemäßen Fungizidpräparaten auf Meliaceenbasis handelt es sich um Naturstoffe mit den oben genannten Vorteilen gegenüber konventionellen, synthetischen Pflanzenschutzmitteln: Synergistische, additive und an unterschiedlichen Wirkorten des Pathogens angreifende Wirkung dieser Naturstoffe, die gleichzeitig auch die erwähnte resistenzinduzierende Wirkung haben können.

Besonders vorteilhaft ist die Verwendung von durch wäßrige oder alkoholische Extraktions-Aufbereitung erhaltenen Extrakten unterschiedlichen Reinheits- und Anreicherungsgrades. Grundsätzlich eignen sich die angegebenen Meliaceen (Neem-Baum und Persischer Flieder) aber auch mit anderen Pflanzenteilen wie Fruchtfleisch, Blättern, Wurzeln, Holz, innerer und äußerer Rinde zur Anwendung als wirksame fungizide Pflanzenschutzmittel.

Die Anwendung der erfindungsgemäßen Fungizid-Präparate kann vorzugsweise im Pillierungsverfahren durch Einmengung in herkömmliche Saatgutumhüllungssubstanzen erfolgen, um die Keimlinge gegen Befall durch samen- oder bodenbürtige pathogene Pilze zu schützen. Alternativ können die Präparate in wäßriger Zusammensetzung auch als Spritzbrühen direkt auf die entwickelten Pflanzen appliziert werden, zum Schutz vor Befall bzw. zur Verringerung der Schädigung bereits befallener Pflanzen.

Besonders untersucht wurde die Wirkung der erfindungsgemäßen Verwendung von Meliaceen-Extrakten zur Reduzierung von Keimlingskrankheiten bei Rüben durch Wurzelbranderreger. Durch Einsatz eines angereicherten Neem-Kern-Extrakts (NKE) konnte das Pilzwachstum von Rhizoctonia solani - eines der zum Wurzelbranderregerkomplex zählenden Pathogene - erheblich reduziert werden. Der ED50-Wert - d.h. die Konzentration einer fungiziden Substanz, bei welcher der pathogene Pilz im Verhältnis zur Kontrollgruppe nur 50 % des Wachstums erreicht - lag bei einer Konzentration von 100 mg/l, aber bereits bei Einsatz von 1 mg/l konnten schon signifikante Wachstumshemmungen nachgewiesen werden.

Auch die anderen zum Wurzelbranderregerkomplex zählenden Pathogene wie Pythium ultimum, Aphanomyces cochlioides, Phoma betae, Alternaria tenuis und Fusarien konnten durch Einsatz des erfindungsgemäßen angereicherten NKE im Wachstum deutlich gehemmt werden, wie in Gewächshaus- und Feldversuchen festgestellt wurde.

Die Erfindung eignet sich selbstverständlich nicht nur zur Anwendung bei Wurzelbrand von Rübenpflanzen. Vielmehr entfalten erfindungsgemäße Pflanzenschutzzubereitungen auf Meliaceen-Basis Fungizid-Wirkungen gegenüber einer Vielfalt von Schadpilzen und können beispielsweise vorteilhaft bei den nachstehend angeführten Kulturpflanzen gegenüber den nachstehend angegebenen Pilzerkrankungen bzw. pathogenen Pilzen zum Einsatz kommen:
- Wurzelbrand der Rüben (Pythium ultimum Aphanomyces cochlioides, Rhizoctonia solani, Phoma betae, Alternaria tenius, Fusarium spp.)
- Schorf (Venturia inaequalis) und Mehltau (Podosphaera leucotricha) im Obstbau
- Falscher Mehltau (Plasmopera viticola) und echter Mehltau im Weinbau (Uncinula necator)
- Fäule im Weinbau, bei Erdbeeren und Zierpflanzen (Botrytis cenerea)
- Kraut- und Knollenfäule (Phytophthora infestans) bei Kartoffeln und Tomaten.

Es sei noch betont, daß die befallsmindernde Wirkung nicht an einen einzelnen Wirkstoff gebunden zu sein scheint, und daß eine additive bzw. synergistische Wirkung verschiedener in dem angegebenen Meliaceen enthaltener Wirkstoffkomponenten vorzuliegen scheint. Durch die Komplexität der in den Extrakten enthaltenen Substanzen sind vielschichtige komplimentäre und synergistische Wirkungen möglich, so u.a. auch eine Nitrifikationshemmung.

Die Erfindung betrifft auch Verfahren für die Gewinnung von Wirkstoffkonzentraten zur bestimmungsgemäßen Verwendung als Fungizid, sowie ein Pflanzenschutzmittel mit fungizider Wirkungsrichtung umfassend einen Wirkstoffgehalt der angegebenen Meliaceen, in Zurichtung für die Verwendung als fungizides Pflanzenschutzmittel.

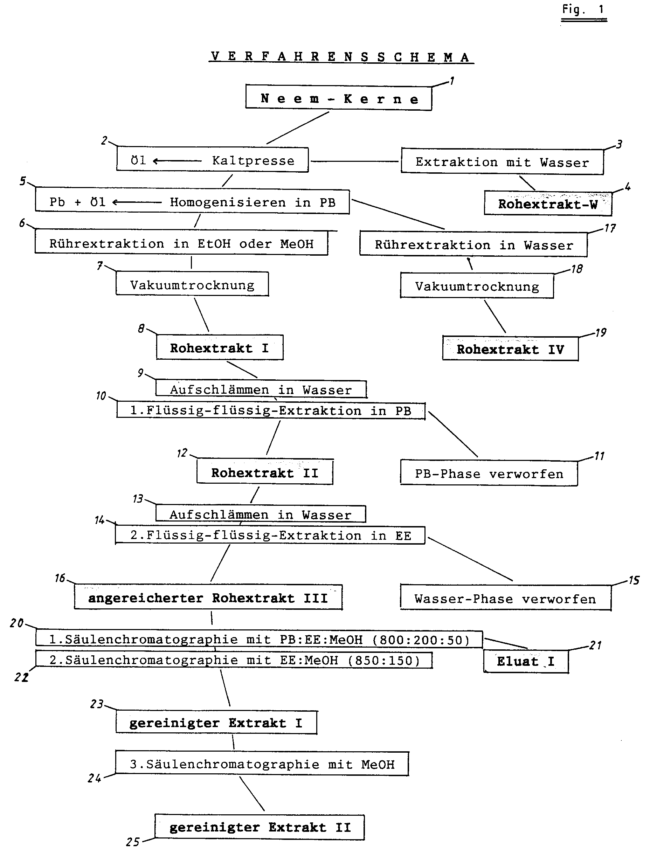

Im folgenden wird die Erfindung hinsichtlich bevorzugter Herstellungsverfahren für erfindungsgemäße Wirkstoffkonzentrationen sowie hinsichtlich bevorzugter Anwendungs- und Verwendungsarten derartiger Präparate anhand entsprechender Herstellungs- und Anwendungsbeispiele näher erläutert, unter Bezugnahme auf die Zeichnung; in dieser zeigen
- Fig. 1: ein Verfahrensschema, in welchem bevorzugte Herstellungsarten verschiedener erfindungsgemäßer Wirkstoffkonzentrationen zusammengefaßt sind und auf welches bei der Beschreibung der Herstellungsbeispiele zurückgegriffen wird;

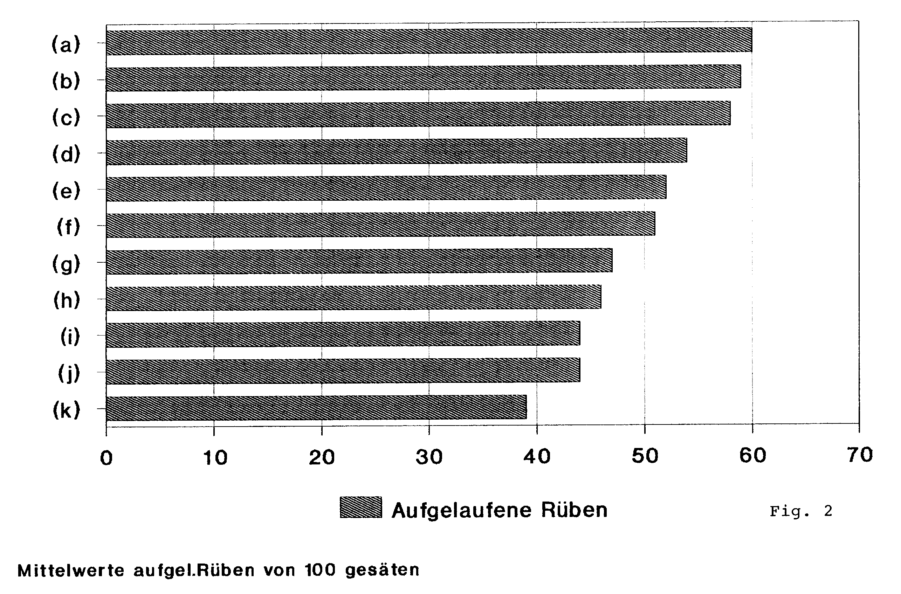

- Fig. 2: eine graphische Darstellung zur Veranschaulichung der mit erfindungsgemäßen Pflanzenschutzpräparaten erzielten Ergebnisse am Beispiel der Überlebensrate von mit erfindungsgemäßen Neem-Präparaten pillierten Rübenpflanzen gegenüber Wurzelbranderregern; an der Abszisse sind dabei die jeweils je 100 gesähten Rübensamen aufgegangenen Rübenpflanzen aufgetragen, an der Ordinate die verschiedenen im Anwendungsversuch untersuchten erfindungsgemäßen Präparat-Varianten im Vergleich mit herkömmlichen Pflanzenschutzpräparaten.

### Herstellungsbeispiele

Die nachfolgenden Herstellungsbeispiele betreffen speziell Produkte aus Neem-Kernen (Herstellungsbeispiele I bis V) bzw. aus Früchten des Persischen Flieders (Herstellungsbeispiele VI und VII), zur Stärkung der Pflanze und Reduzierung von pflanzenpathogenen Pilzen, die Wurzelbrand erzeugen. Bei der Beschreibung der Beispiele wird jeweils auf das Verfahrensschema gemäß Fig. 1 der Zeichnung Bezug genommen.

### Herstellungsbeispiel I

Geschälte oder ungeschälte Neem-Kerne (als Ausgangsmaterial 1 gemäß dem Verfahrensschema) werden in einer Kaltpresse zerkleinert, wodurch gleichzeitig ein großer Teil des Öls abgetrennt werden kann. Als einfachste Herstellungsart schließt sich eine Wasserextraktion (3 in Fig. 1) von ca. 5 bis 7 Stunden an, bei welcher 500 g Neem-Kerne in 10 Liter Wasser durch Schütteln, Rühren oder einfaches Durchtränken extrahiert werden und sich im Ruhezustand ein Bodensatz bildet. Die überstehende Flüssigkeit wird abfiltriert und bildet als 'Rohextrakt-W' (4 in Fig. 1) ein erstes für die Zwecke der Erfindung verwendbares Wirkstoffkonzentrat. Dieser Rohextrakt-W ist als solcher unmittelbar gebrauchsfertig und kann in dieser Form als Fungizid-Präparat appliziert werden, vgl. Anwendungsbeispiel III unten.

### Herstellungsbeispiel II

Anstelle der Wassserextraktion (3 in Fig. 1) kann eine Homogenisierung in Petrol-Benzin (5 in Fig. 1) durchgeführt werden, um noch restliches Öl herauszulösen, als Vorstufe für die Gewinnung stärker gereinigter und damit in ihrer Wirksamkeit erhöhter erfindungsgemäßer Wirkstoffkonzentrate.

Hieran schließen sich Rührextraktionen mit Äthanol oder Methanol (6 in Fig. 1) an, beispielsweise fünfmal wiederholte 20-stündige Extraktion, mit nachfolgender Vakuumtrocknung (7 in Fig. 1) wodurch ein 'Rohextrakt I' (8 in Fig. 1) erhalten wird, der wiederum als solcher unmittelbar verwendbar ist, beispielsweise im Pillierungs- oder im Sprühverfahren, der jedoch insbesondere als Ausgangsstoff für eine weitere Raffinierung dienen kann. Bei der konkreten Ausgestaltung der Rührextraktion 6 als fünfmalige 20-stündige Extraktion ergeben die beiden ersten Extraktionen - ausgehend von 500 g Kernen - je ca. 20 g Extrakt, die nachfolgenden drei Extraktionen ca. je 7 g Extrakt.

Zur weiteren Raffinierung kann in einer weiteren Ausgestaltung des Beispiels in folgender Weise vorgegangen werden:
Der wie vorstehend erhaltene 'Rohextrakt I' (8 in Fig. 1) wird bei 9 in Wasser aufgeschlämmt und bei 10 einer ersten Flüssig-flüssig-Extraktion in Petrol-Benzin unterworfen, d.h. in Petrol-Benzin zur Entfernung von noch verbliebenem Öl ausgeschüttelt. Die Petrol-Benzin-Phase wird bei 11 verworfen. Durch diese erste Flüssig-flüssig-Extraktion erhält man einen 'ölfreien Rohextrakt II' (12 in Fig. 1).

Hieran kann sich in weiterer Raffinierung nach erneutem Aufschlämmen in Wasser (13 in Fig. 1) eine zweite Flüssig-flüssig-Extraktion gegen Essigsäure-Äthylester (Essig-Ester EE) anschließen (14 in Fig. 1), wodurch die extrem wäßrigen Komponenten bei 15 eliminiert werden. Der auf diese Weise bei 16 erhaltene 'angereicherte Rohextrakt III' bildet nach Vakuumtrocknung eine weitere Ausgangssubstanz, die in ähnlicher Weise wie die 'Rohextrakte I oder II' in entsprechenden Dosierungen im Pillierungsverfahren in die entsprechenden Saatgutumhüllungssubstanzen eingearbeitet werden kann, oder aber im Sprühverfahren auf aufgegangene Pflanzen appliziert werden kann.

### Herstellungsbeispiel III

Hierbei wird wie in den Beispielen I und II, ausgehend von Neem-Kernen, das Öl entfernt, gemäß Stufen 2 und 5 des Verfahrensschemas aus Fig. 1.

Danach wird in einer anschließenden Rührextraktion in Wasser (bei 17 in Fig. 1) nach anschließender Vakuumtrocknung bei 18 ein 'Wasserrohextrakt IV' erzeugt (19 in Fig. 1). Dieser kann gesondert als Wirkstoffkonzentrat verwendet werden oder unter bestimmten Umständen den 'Rohextrakten I, II oder III' zugesetzt werden.

### Herstellungsbeispiel IV

Der in Herstellungsbeispiel II als Endprodukt erhaltene 'angereicherte Rohextrakt III' (16 in Fig. 1) dient hier als Ausgangsprodukt für eine weitere Reinigungsbehandlung. Hierzu wird der rückgelöste 'Rohextrakt III' in einer Kieselgelsäule einer ersten Säulenchromatographie (20 in Fig. 1) unterworfen, in welcher lipophile Substanzen mit dem Laufmittelgemisch Petrolbenzin:Essig-Ester:Methanol (800:200:50) als 'Eluat I' (21 in Fig. 1) eliminiert werden. In einer zweiten Säulenchromatographie mit einem Laufmittelgemisch Essig-Ester:Methanol (850:150) (22 in Fig. 1) wird bei 22 ein 'gereinigter Extrakt I' erhalten, der wiederum entweder allein oder als Zusatz zu den 'Rohextrakten I, II oder III' verwendet werden kann.

### Herstellungsbeispiel V

Die in dem Beispiel IV verwendete Chromatographiesäule wird nun mit MeOH gereinigt; in diesem dritten Säulenchromatographielauf mit MeOH (bei 23 in Fig. 1) erhält man einen 'gereinigten Extrakt II' (bei 24 in Fig. 1). Dieser 'gereinigte Extrakt II' besitzt Anwendbarkeiten bei verschiedenen Krankheiten.

### Herstellungsbeispiele VI und VII

Diese Beispiele betreffen die Verwendung der Früchte des Persischen Flieders für die Zwecke der Erfindung.

Früchte des Persischen Flieders werden gemahlen und einer alkoholischen oder wäßrigen Rührextraktion unterzogen. Die Rührextraktion kann 20 Stunden in Alkohol zu einem 'Extrakt V' oder in Wasser zu einem 'Extrakt VI' erfolgen. Nach Vakuum-Trocknung wird der Extrakt wie in den unten folgenden Anwendungsbeispielen I und II (für Neem-Präparate) bei der Pillierungsanwendung in die Saatgutumhüllungssubstanz eingemischt oder wie in Anwendungsbeispiel III als Spritzbrühe appliziert.

In den folgenden Anwendungsbeispielen wird die Anwendung von gemäß den vorhergehenden Herstellungsbeispielen gewonnenen Wirkstoffkonzentraten in Präparaten für Pflanzenschutzzwecke beschrieben.

### Anwendungsbeispiel I

Hierin wird die befallsmindernde Wirkung von erfindungsgemäßen Wirkstoffpräparaten gegen Keimlingserkrankungen von Rüben durch den Wurzelbranderreger untersucht und nachgewiesen.

Als Wirkstoffkonzentrat wird einer der Extrakte W, I bis VI gemäß den Herstellungsbeispielen I bis VII verwendet, und zwar im Pillierungsverfahren durch Einarbeiten der betreffenden Extrakte in konventionelle Saatgutumhüllungssubstanzen. Die Menge der Rohextrakte hängt jeweils von der Verseuchung des Bodens mit Wurzelbranderregern ab. Es wurden Versuche mit 20 bis 60 g /100 000 Rübensamen (= 20 bis 60 g/U (U = Unit = 100 000 Samen)) gemacht.

Die Ergebnisse der Versuche sind in Fig. 2 in Form einer graphischen Darstellung wiedergegeben, welche die Über-lebensrate der mit den erfindungsgemäßen Extrakten pillierten Rübenpflanzen und damit die Wirkung der erfindungsgemäßen fungiziden Pflanzenschutzpräparate im Vergleich mit konventionellen Pillierungszusätzen zeigt. Im einzelnen sind in Fig. 2 an der Ordinate links die verschiedenen Pillierungsvarianten (mit verschiedenen erfindungsgemäßen Präparaten in unterschiedlicher Konzentration sowie im Vergleich mit konventionellen Zusätzen) dargestellt; zu jeder Variante ist jeweils das erzielte Ergebnis in Form eines Balkens in Zuordnung zu der Abszisse dargestellt, an welcher die Anzahl der jeweils für 100 gesähte Rübensamen aufgelaufenen Rüben aufgetragen ist.

Im einzelnen wurden die folgenden Pillierungsvarianten untersucht und die Ergebnisse in Fig. 2 zusammengestellt:
(a) konventioneller Zusatz (mit Fungizid- **und** Insektizid-Komponenten)
(b) 60 g/U angereicherter Neem-Kern-Extrakt (Rohextrakt III gemäß Fig. 1)
(c) 30 g/U äthylalkoholischer Neem-Kern-Extrakt (Rohextrakt I gemäß 8 in Fig. 1)
(d) 30 g/U angereicherter Neem-Kern-Extrakt (Rohextrakt III gemäß 16 in Fig. 1)
(e) 20 g/U wäßriger Neem-Kern-Extrakt (Rohextrakt IV bei 19 in Fig. 1)
(f) 20 g/U äthylalkoholischer Extrakt von Persischem Flieder (Extrakt V gemäß Herstellungsbeispiel VI)
(g) konventionelle Fungizide (ohne Insektizidkomponente)
(h) 20 g/U angereicherter Neem-Kern-Extrakt (angereicherter Rohextrakt III gemäß Fig. 1)
(i) Neem-Pulver (d.h. Nicht-Extrakt) ohne Öl
(j) herkömmliches Thiocarbamat-TMTD-Fungizid (ohne zusätzliche Insektizidkomponente)
(k) Kontrolle / Gruppe ohne Zusatz

Wie ersichtlich zeigt die Variante (a) die stärkste Schutzwirkung. Hierbei handelt es sich um eine herkömmliche, besonders wirkungsstarke Kombination von Insektizid- und Fungizid-Komponenten wie Carbamate und Thiocarbamate, deren Einsatz jedoch den eingangs genannten Bedenken begegnet und den genannten umweltschutzrechtlichen Beschränkungen unterliegt. Weitere Vergleichsvarianten sind die Varianten (g) = eine Kombination konventioneller Fungizide, (j) = konventionelles TMTD Thiocarbamat-Fungizid, sowie (k) = reine Kontrollgruppe ohne Zusatz. Wie ersichtlich liegt selbst die erfindungsgemäße Variante (i), welche ein nicht-extrahiertes reines Neem-Pulver-Präparat betrifft, noch signifikant über der reinen Kontrollgruppe (k) und in gleicher Größe wie die (konventionelle) TMTD-Variante (j). Von den erfindungsgemäßen Präparaten auf Extraktbasis liegt selbst die in der geringsten Dosis von 20 g/U angewandte Variante (h) praktisch gleichauf mit der konventionellen Fungizidvariante (g). Die übrigen erfindungsgemäßen Varianten (b) bis (f) liegen sämtlich signifikant über den Vergleichsvarianten (g), (j) und der Kontrollgruppe (k), wobei die erfindungsgemäßen Varianten (b) und (c) praktisch die gleiche Wirkung wie der wirkungsstärkste, eine Insektizid-Fungizid-Kombination enthaltende, konventionelle Zusatz (a) erreichen.

### Anwendungsbeispiel II

Hierbei wurden die verschiedenen, nach dem Aufschließungsschema gemäß Fig. 1 erhaltenen Extrakte I bis IV in unterschiedlichen, je auf die Bedarfssituation abgestellten Mischungen angewandt und in die Saatgutumhüllungssubstanzen eingearbeitet; hierbei wurde durchweg ein wirksamer Schutz der Keimpflanzen gegenüber den unterschiedlichen vorhandenen Pilzen erreicht. Die vorteilhaften Ergebnisse wurden außer an Rübensamen auch an Getreide und im Gemüsebau an über Samen vermehrten Kulturen erprobt.

### Anwendungsbeispiel III

Dieses Beispiel betrifft die Anwendung erfindungsgemäßer Pflanzenschutzzusammensetzungen im Spritzverfahren, und zwar zum Schutz gegen Phytophthora bei Kartoffel- und Tomatenpflanzen.

Der wäßrige Rohextrakt-W (4 gemäß Fig. 1) ist bereits gebrauchsfertig und kann direkt appliziert werden; ein gutes Benetzen der Blätter bei Anwendung gegenüber Phytophthora bei Tomaten ist die Voraussetzung für eine erfolgreiche Bekämpfung. Je nach Befallsdruck kann eine Wiederholung der Spritzung nach einigen Tagen angezeigt sein.

Die nicht-wäßrigen Extrakte werden in eine wäßrige Phase gebracht und sodann in Form einer Spritzung gleichmäßig auf dem Pflanzenbestand verspritzt (je nach Pilz und seinem Stadium sowie je nach dem Wachstumsstadium der Pflanze). Gegen Phytophthora sind bei Kartoffel und Tomate von dem angereicherten Rohextrakt III 600 g/ha in 1000 l zu applizieren, oder ein Gemisch der Rohextrakte I, II und III sowie Zusätze der gereinigten Extrakte I oder II (je nach Verseuchungsgrad und Entwicklungsstadium der Kulturpflanze).

Entsprechende Anwendungen beziehen sich auf Apfelschorf, Gurkenmehltau, Mehltau an Stachelbeeren und Rost an Sellerie, sowie gegenüber Getreide-Pilzen, beispielsweise Mehltau.

Die genaue Dosierung und die Wahl der Extrakte bzw. Extraktmischungen ist in Abhängigkeit von den jeweiligen konkreten Bedingungen (zu schützende Pflanze, Art des zu bekämpfenden Schädlingspilzes, Entwicklungsstadium der Kulturpflanze, Verseuchungsgrad) vorzunehmen.

In sämtlichen Fällen wurden durch die Behandlung mit den erfindungsgemäßen Pflanzenschutzpräparaten signifikante Wirkungen erzielt, die mit denen herkömmlicher, jedoch aus Gesundheits- oder Umweltschutzgründen indizierter oder in ihrer Anwendung beschränkter Pflanzenschutzpräparate vergleichbar sind.

Die Erfindung wurde vorstehend anhand bevorzugter Ausführungsbeispiele erläutert, denen jedoch keinerlei einschränkende Bedeutung zukommt. Sowohl hinsichtlich der verwendeten Pflanzenteile, der mehr oder weniger aufwendigen Aufbereitung bzw. Reingewinnung der Wirkstoffe und der Anwendungsart sowie der angewandten Dosierungen sind mannigfache Abwandlungen möglich, ohne daß hierdurch der Rahmen der Erfindung verlassen wird.

## Patentansprüche

1. Verwendung von Pflanzen oder Pflanzenteilen des Neembaumes (Antelaea azadirachta, Synonym: Melia azadirachta L., Synonym: Azadirachta indica A.Juss.) oder des Persischen Flieders (Melia azedarach L., Synonym: M. sempervirens Sw., Synonym: M. japonica Don.) als Wirkstoffkomponente in Pflanzenschutzmitteln mit fungizider Wirkungsrichtung, zur Hemmung des Befalls bzw. der Schädigung von Kulturpflanzen mit bzw. durch pflanzenpathogene(n) Pilzen.

2. Verwendung nach Anspruch 1,
dadurch **gekennzeichnet,**
daß die Pflanzen bzw. Pflanzenteile wie Blätter, Fruchtfleisch, Rinde, Holz unmittelbar in geeigneter Applikationsform, z.B. getrocknet und gemahlen als Pulver, verwendet werden.

3. Verwendung nach Anspruch 1 oder 2,
dadurch **gekennzeichnet,**
daß die Kerne des Neembaumes oder die Früchte des Persischen Flieders verwendet werden.

4. Verwendung nach Anspruch 1 und insbesondere nach Anspruch 3, in Form von durch Aufbereitung aus den Pflanzenteilen gewonnenen angereicherten und gereinigten Wirkstoffkonzentraten.

5. Verwendung nach Anspruch 4, insbesondere in Verbindung mit Anspruch 3, in Form von Extrakten.

6. Verwendung nach Anspruch 5, in Form von wäßrigen oder alkoholischen Extrakten.

7. Verfahren zur Herstellung von Wirkstoffkonzentraten für die Verwendung nach den Ansprüchen 5 oder 6,
dadurch **gekennzeichnet,**
daß nach Abtrennen des Öls mittels Kaltpressen (2, Fig. 1) durch Wasserextraktion (3) ein wäßriger Rohextrakt-W (4 in Fig. 1) hergestellt wird, vorzugsweise zur direkten Applikation gegenüber Schadpilzen im Gemüseanbau wie falscher Mehltau bei Gurken.

8. Verfahren zur Herstellung von Wirkstoffkonzentraten für die Verwendung nach den Ansprüchen 5 oder 6,
dadurch **gekennzeichnet,**
daß nach Abtrennung des Öls mittels Kaltpressen (2 in Fig.1) und anschließendes Homogenisieren (5) in Petrol-Benzin durch alkoholische Schüttel- bzw. Rührextraktion, vorzugsweise in einem C₁-C₄-Alkanol, vorzugsweise in Äthanol, mit anschließender Sprüh-, Vakuum- oder Frosttrocknung (7) ein 'Rohextrakt-I' hergestellt wird.

9. Verfahren nach Anspruch 8,
dadurch **gekennzeichnet,**
daß zur weiteren Wirkstoffaufbereitung aus dem 'Rohextrakt I' (8) durch Flüssig-flüssig-Extraktion in Petrol-Benzin (9,10,11) mit anschließender Trocknung ein 'Rohextrakt II' hergestellt wird.

10. Verfahren nach Anspruch 9,
dadurch **gekennzeichnet,**
daß zur weiteren Wirkstoffaufbereitung aus dem 'Rohextrakt II' (12 in Fig. 1) durch eine weitere Flüssig-flüssig-Extraktion in Essigsäure-Äthylester (13,14,15) ein 'angereicherter Rohextrakt III' hergestellt wird.

11. Verfahren nach Anspruch 10,
dadurch **gekennzeichnet,**
daß zur noch weiteren Wirkstoffaufbereitung aus dem 'angereicherten Rohextrakt III' (16) durch Säulenchromatographie mit PB:EE:MeOH (800:200:50) ein 'Eluat I' (21), durch weitere Säulenchromatographie mit EE:MeOH (850:150) ein 'gereinigter Extrakt I' (23) und sodann durch nochmalige Säulenchromatographie (24) mit MeOH ein 'gereinigter Extrakt II' (25) hergestellt wird.

12. Verfahren zur Herstellung von Wirkstoffkonzentraten für die Verwendung nach Anspruch 5 oder Anspruch 6, mit Früchten des Persischen Flieders,
dadurch **gekennzeichnet,**
daß nach Homogenisierung der Früchte in geeigneten Extraktionsmitteln alkoholische, vorzugsweise äthanolische, oder wäßrige Extrakte der Fliederfrüchte hergestellt werden.

13. Verwendung nach einem der Ansprüche 1 bis 6, vorzugsweise auf der Grundlage der nach einem oder mehreren der Ansprüche 7 bis 12 gewonnenen Wirkstoffkonzentrate,
dadurch **gekennzeichnet,**
daß das bzw. die Wirkstoffkonzentrat(e) einzeln oder im Gemisch im Pillierungsverfahren in die Saatgutumhüllungssubstanzen der zu schützenden Kulturpflanzen eingemischt werden, zur Stärkung und zum Schutz der Pflanze im Keimstadium gegen pathogene Pilze.

14. Verwendung nach einem der Ansprüche 1 bis 6, vorzugsweise auf der Grundlage der nach einem oder mehreren der Ansprüche 7 bis 12 gewonnenen Wirkstoffkonzentrate,
dadurch **gekennzeichnet,**
daß das bzw. die Wirkstoffkonzentrat(e) einzeln oder im Gemisch in wäßrige Form gebracht und als Grundsubstanz zur Stärkung gegenüber pathogenen Pilzen oder als Spritzbrühe zur direkten Bekämpfung der pathogenen Pilze auf die zu schützenden Pflanzen appliziert wird/werden.

15. Verwendung nach einem oder mehreren der vorhergehenden Ansprüche, zum Einsatz bei den nachstehend aufgeführten Kulturpflanzen gegenüber den nachstehend angegebenen Pilzerkrankungen bzw. pathogenen Pilzen:
- Wurzelbrand der Rüben (Pythium ultimum Aphanomyces cochlioides, Rhizoctonia solani, Phoma betae, Alternaria tenuis, Fusarium spp.)
- Schorf (Venturia inaequalis) und Mehltau (Podosphaera leucotricha) im Obstbau
- Falscher Mehltau (Plasmopera viticola) und echter Mehltau im Weinbau (Uncinula necator)
- Fäule im Weinbau, bei Erdbeeren und Zierpflanzen (Botrytis cenerea)
- Kraut- und Knollenfäule (Phytophthora infestans) bei Kartoffeln und Tomaten.

16. Pflanzenschutzmittel mit fungizider Wirkungsrichtung, umfassend einen Wirkstoffgehalt von Pflanzen oder Pflanzenteilen des Neembaums oder des Persischen Flieders, in Zurichtung für die Verwendung nach einem oder mehreren der vorhergehenden Ansprüche.
